# EUROPEAN PATENT SPECIFICATION

(11) **EP 3 862 919 B1**
(45) Date of publication and mention of the grant of the patent: **27.05.2026**
(21) Application number: 21152325.3
(22) Date of filing: 19.01.2021
(51) Int. Cl.: G06V 20/56, B60W 60/00, G06N 3/0464, G01S 7/41, G01S 13/86, G01S 13/89, G01S 13/931

(54) **VEHICLE CONTROL DEVICE**
FAHRZEUGSTEUERUNGSVORRICHTUNG
DISPOSITIF DE COMMANDE DE VÉHICULE

(30) Priority: 05.02.2020 JP 2020017985
(43) Date of publication of application: 11.08.2021
(73) Proprietor: MAZDA MOTOR CORPORATION, Hiroshima 730-8670 (JP); NXP B.V., 5656 AG Eindhoven (NL)
(72) Inventor: ISHIBASHI, Masato, Hiroshima, 730-8670 (JP); TSUCHIYAMA, Kiyoyuki, Hiroshima, 730-8670 (JP); HAMANO, Daisuke, Hiroshima, 730-8670 (JP); FUTA, Tomotsugu, Hiroshima, 730-8670 (JP); HORIGOME, Daisuke, Hiroshima, 730-8670 (JP); HOJIN, Eiichi, Hiroshima, 730-8670 (JP); TASAKI, Atsushi, Hiroshima, 730-8670 (JP); HASHIMOTO, Yosuke, Hiroshima, 730-8670 (JP); KIHARA, Yusuke, Hiroshima, 730-8670 (JP); VAN DEN BOSSCHE, Arnaud, 5656 AG Eindhoven (NL); MARSHAL, Ray, 5656 AG Eindhoven (NL); SURICO, Leonardo, 5656 AG Eindhoven (NL)
(74) Representative: Lorenz Seidler Gossel Part. mbB

(56) References cited:
- US-A1- 2019 384 303
- JO KICHUN ET AL: "Development of Autonomous Car-Part I: Distributed System Architecture and Development Pro", IEEE TRANSACTIONS ON INDUSTRIAL ELECTRONICS, IEEE SERVICE CENTER, PISCATAWAY, NJ, USA, vol. 61, no. 12, 1 December 2014 (2014-12-01), pages 7131 - 7140, XP011558820, ISSN: 0278-0046, [retrieved on 20140912], DOI: 10.1109/TIE.2014.2321342

## Description

### BACKGROUND

The present disclosure relates to a vehicle control device used for autonomous driving of an automobile, for example.

Japanese Unexamined Patent Publication No. 2017-47694 discloses a technology of outputting either one of a first control signal generated based on autonomous driving control information and a second control signal generated based on relative information between the subject vehicle and surrounding objects to a drive unit and, if an abnormality is detected in the autonomous driving control information, outputting the second control signal, in place of the first control signal, to the drive unit.

International Patent Publication No. WO2018/225225 discloses a technology in which, if an abnormality is detected in any of a plurality of surrounding environment acquisition devices, a recognition/determination ECU, and an integrated control ECU, a specific control that defines operation to be executed by each of the surrounding environment acquisition devices, the recognition/determination ECU, and the integrated control ECU is executed sequentially in a switching manner in accordance with the time elapsed from the detection of the abnormality.

Japanese Patent No. 6289284 discloses a semiconductor device including: a recognition unit for recognizing an object present in the neighborhood of the vehicle; a route calculation unit for calculating a cruise route of the vehicle in an automated control mode based on the recognized object; and a mode control unit for switching the mode to a manual control mode when failing to calculate a cruise route avoiding the recognized object.

### SUMMARY

Jo Kichun et al. (in "Development of Autonomous Car-Part I: Distributed System Architecture and Development Process", IEEE Transactions of industrial electronics, IEEE Service Center, Piscataway, NK, USA, 1 December 2014, vol. 61, no. 12, pages 7131-7140) discloses a distributed system architecture with functional components of the autonomous driving system being separated as individual computing units.
Further prior art is known from US 2019/384303 A1.

In these days, development of autonomous driving systems has been promoted at the national level. In an autonomous driving system, generally, vehicle external environment information is acquired with cameras, etc., and a route along which the vehicle should cruise is calculated based on the acquired vehicle external environment information. In this calculation of the route, authorization of the vehicle external environment is important, and in this authorization of the vehicle external environment, use of deep learning is being studied. Authorization of vehicle external environment and calculation of the route using deep learning are still in the course of development. A vehicle control device is therefore required to adapt itself to technological advances and changes while ensuring the safety of the vehicle. Also, desired is a vehicle control device that is easily adapted to expansion to vehicle types different in function and grade.

The documents cited above are technologies related to autonomous driving, but still have room for improvement in terms of adapting them to technological changes and vehicle type expansion while ensuring the safety of the vehicle.

In view of the problem described above, an objective of the present disclosure is providing a vehicle control device adapted to technological changes (future expansion) and/or vehicle type expansion (expansion to vehicle types different in function, grade, and place of destination) while ensuring the safety of the vehicle.

This object is solved by the subject-matter of independent claims 1. Embodiments are subject of the subclaims.

In expansion to vehicle types different in function, grade, and destination from one another (hereinafter simply called vehicle type expansion), the number of cameras mounted on a vehicle, the positions of the cameras, and the resolution of the cameras may differ among the types. Also, in the course of the vehicle type expansion, the algorithm and image processing capability for processing of images output from the cameras may be changed. In consideration of these, according to the present invention, the signal processing IC unit for performing image processing on the output from the cameras is provided independently from the other part of the configuration. With this configuration, it is possible to respond to such vehicle type expansion by only changing the signal processing IC unit. On the occasion of vehicle type expansion, then, common IC units can be used among vehicle types as the later-stage recognition processing IC unit and judgment IC unit, for example.

Also, as described above, the "recognition processing of the external environment of a vehicle" is in the process of technological progress and predicted to experience great technological change in the future. In consideration of this, the recognition processing IC unit for performing recognition processing is provided independently from the other part of the configuration. With this configuration, the recognition processing IC unit can be replaced with the latest one appropriately in a cycle of vehicle model changes.

At the stage subsequent to the recognition processing IC unit, the judgment IC unit for performing judgment processing for the final cruise control of the vehicle is provided. With such a configuration, a mature process can be adopted in the judgment IC unit, for example, and thus the reliability of the judgment processing for the cruise control of the vehicle can be enhanced.

According to the invention, since the recognition IC unit uses deep learning, the recognition precision of the external environment of the vehicle can be enhanced.

The vehicle control device according to the above mode further includes a backup safety IC unit for receiving the image data output from the signal processing IC unit, performing recognition processing of the external environment of the vehicle from the image data based on a predetermined rule without using deep learning techniques, and performing judgment processing for cruise control of the vehicle based on external environment data obtained through the recognition processing. The judgment processing IC unit receives a result of the judgment processing by the backup safety IC unit, and outputs a backup cruise control signal based on the result of the judgment processing by the backup safety IC unit instead of the cruise control signal if an abnormality is detected in a passenger.

According to the above configuration, if an abnormality is detected in a passenger, the judgment processing results from the rule-based safety backup IC unit are used. The functional safety level can therefore be improved.

As described above, according to the present disclosure, a vehicle control device adapted to technological changes and/or vehicle type expansion can be provided.

### BRIEF DESCRIPTION OF THE DRAWINGS

FIG. 1 is a block diagram showing a configuration of a vehicle control device according to Embodiment 1.
FIGS. 2A and 2B are block diagrams showing a functional configuration example of the vehicle control device.
FIG. 3 is a block diagram showing a configuration example of each of IC units.
FIG. 4 is a view illustrating an example of image data obtained through image processing by a signal processing IC unit.
FIG. 5 is a view illustrating an example of segmentation image generated through recognition processing by a recognition processing IC unit.
FIG. 6 is a view illustrating an example of integrated data obtained by estimating an external environment by a judgment IC unit.
FIG. 7 is a block diagram showing a configuration of a vehicle control device according to Embodiment 2.

### DETAILED DESCRIPTION

Illustrative embodiments of the present disclosure will be described hereinafter in detail with reference to the accompanying drawings.

### (Embodiment 1)

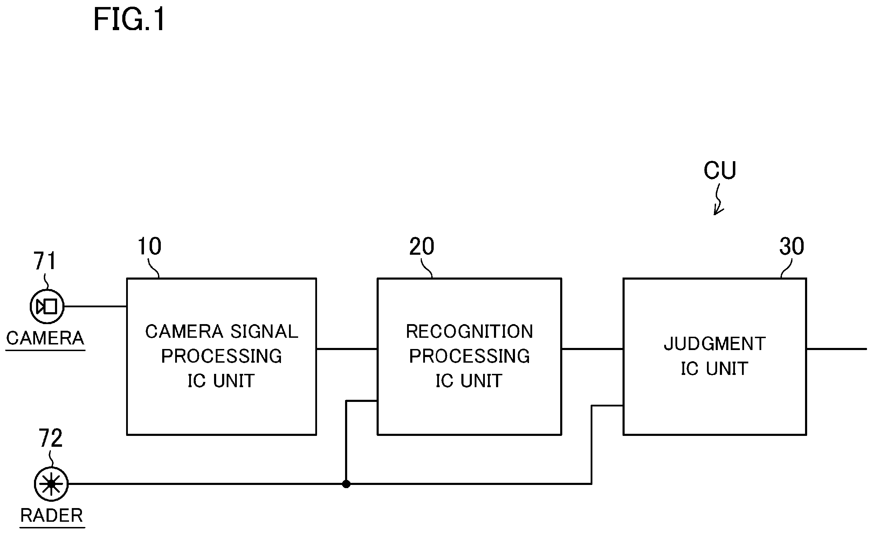

FIG. 1 is a block diagram showing a configuration of a vehicle control device according to this embodiment.

As shown in FIG. 1, the vehicle control device CU of this embodiment has a 3-chip configuration of a signal processing integrated circuit (IC) unit 10, a recognition processing IC unit 20, and a judgment IC unit 30. Although concrete illustration is omitted, the signal processing IC unit 10, the recognition processing IC unit 20, and the judgment IC unit 30 are housed in a single box placed at a specific place inside the vehicle, such as under a seat for a passenger and in a trunk room. Each of the signal processing IC unit 10, the recognition processing IC unit 20, and the judgment IC unit 30 may be constituted by a single IC chip or by a plurality of IC chips. In each IC chip, a single core or die may be accommodated, or a plurality of interfacing cores or dies may be accommodated and connected mutually. In such a core and die, a CPU and a memory for temporarily storing a program for operating the CPU and processed results by the CPU are mounted.

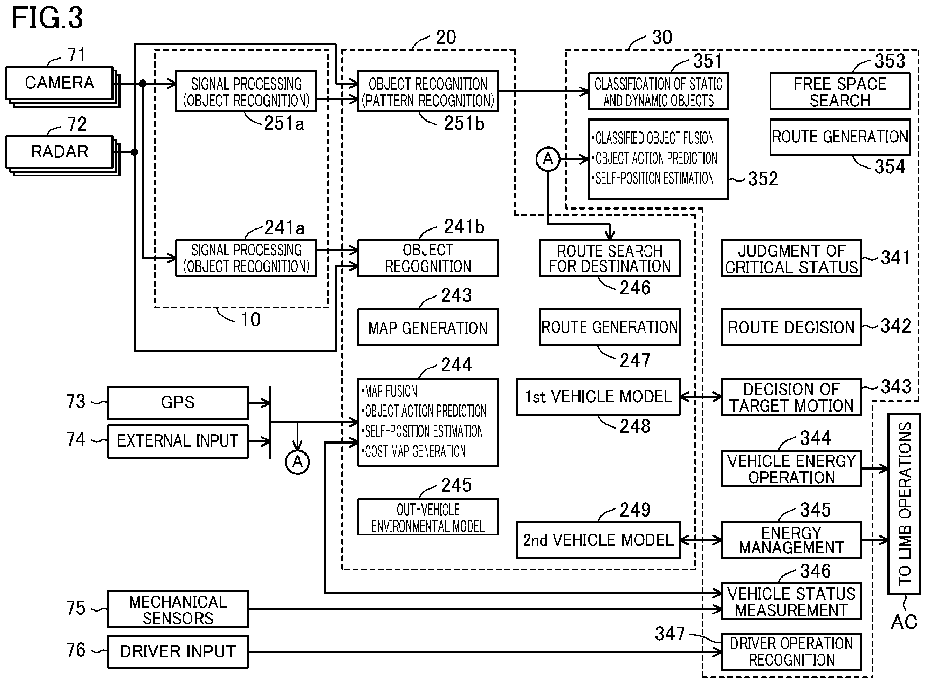

The signal processing IC unit 10 performs image processing on imaging signals received from cameras 71 that image the vehicle external environment and outputs the results as image data. The number of cameras 71 is not specifically limited, but the cameras 71 are placed so as to be capable of imaging the surroundings of the vehicle 360° in the horizontal direction, for example. The imaging data from the cameras 71 are collected into the signal processing IC unit 10. The signal processing IC unit 10 performs image processing on the collected imaging data and outputs the results to the recognition processing IC unit 20 as image data. The cameras 71 are an example of imaging devices that image the vehicle external environment. FIG. 3 shows a concrete block configuration example of the signal processing IC unit 10. Description referring to FIG. 3 will be made later.

The recognition processing IC unit 20 receives the image data output from the signal processing IC unit 10, performs processing of recognizing the external environment of the vehicle based on the image data, and outputs external environment data obtained through the recognition processing. For example, the recognition processing IC unit 20 recognizes an external environment including roads and obstacles based on the image data using deep learning. In the deep learning, a multilayer neural network (deep neural network (DNN)), for example, is used. An example of the multilayer neural network is a convolutional neural network (CNN). The recognition processing IC unit 20 generates at least one route candidate that is on a road and avoids obstacles based on an estimated vehicle external environment and outputs the results as route candidate data. FIG. 3 shows a concrete block configuration example of the recognition processing IC unit 20. Description referring to FIG. 3 will be made later.

The judgment IC unit 30 receives the external environment data output from the recognition processing IC unit 20, performs judgment processing for cruise control of the vehicle based on the external environment data, and outputs a cruise control signal based on the judgment processing results. Specifically, the judgment IC unit 30 determines a cruise route of the vehicle based on the external environment data and determines target motion of the vehicle required when the vehicle cruises along the determined cruise route. Thereafter, the judgment IC unit 30 calculates the driving force, the braking force, and the steering angle for realizing the determined target motion and outputs the cruise control signal based on the calculation results. FIG. 3 shows a concrete block configuration example of the judgment IC unit 30. Description referring to FIG. 3 will be made later.

### 1. Functional Configuration

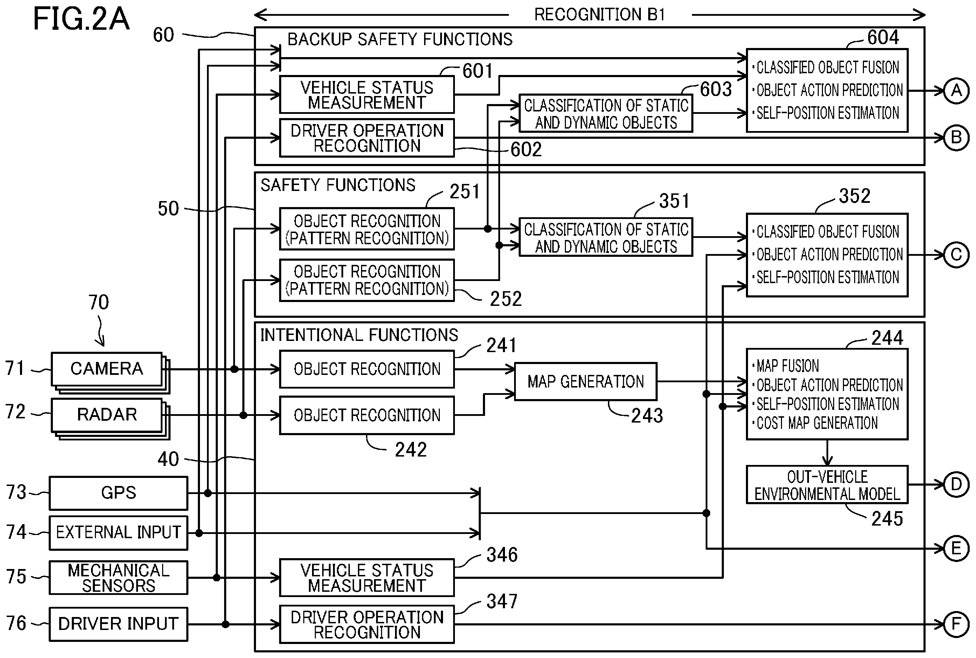

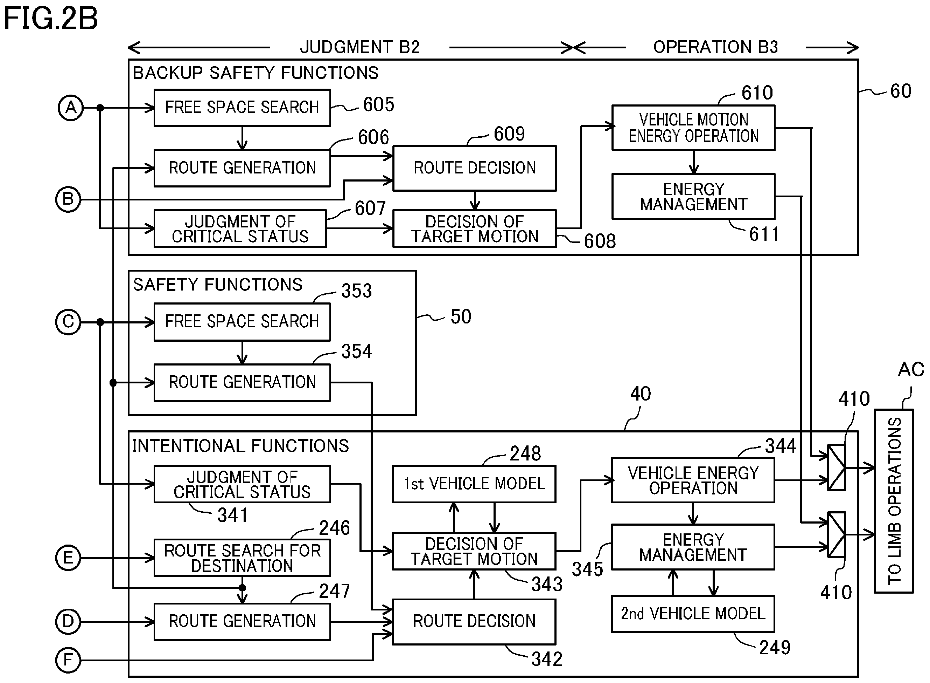

FIGS. 2A and 2B are block diagrams showing a functional configuration example of the vehicle control device CU. In the following description, FIGS. 2A and 2B will be collectively called FIG. 2 simply.

First, the vehicle control device CU (hereinafter simply called the control device CU) is divided, in terms of its function, into a recognition block B1, a judgment block B2, and an operation block B3. The recognition block B1 has a configuration for recognizing the vehicle external environment and the vehicle internal environment (including the driver's condition). The judgment block B2 has a configuration for judging various statuses and conditions based on the recognition results in the recognition block B1 and deciding the operation of the vehicle. The operation block B3 has a configuration for generating signals, data, etc. to be actually transmitted to actuators based on the decision in the judgment block B2.

Also, the control device CU includes (1) a main arithmetic unit 40 constituted by the recognition block B1, the judgment block B2, and the operation block B3 for realizing autonomous driving during normal driving, (2) a safety function part 50 mainly having a function of complementing the recognition block B1 and judgment block B2 of the main arithmetic unit 40, and (3) a backup safety IC unit 60 that moves the vehicle to a safe position in the event of an abnormal situation such as failures of functions of the main arithmetic unit 40 and the safety function part 50.

In the control device CU, the recognition block B1 and the judgment block B2 of the main arithmetic unit 40 execute processing using various models constructed under deep learning using a neural network. With this processing using such models, it becomes possible to perform driving control based on comprehensive judgment on the vehicle status, the vehicle external environment, the driver's condition, etc., that is, perform the control by coordinating a huge amount of input information at real time. As described earlier, however, authorization of the vehicle external environment and calculation of the route using deep learning is still in the course of development, being considered to remain at a level around ASIL-B.

To address the above situation, assuming a possibility that such judgment or processing as to deviate from a specific allowable range (hereinafter this is simply called deviant processing) may be derived by the deep learning executed by the main arithmetic unit 40, the control device CU monitors such deviant processing. When detecting deviant processing, the control device CU replaces the processing with judgment or processing by the safety function part 50 that realizes a functional safety level equivalent to ASIL-D, or makes the main arithmetic unit 40 perform processing again.

Specifically, for example, the safety function part 50 is configured to:
(1) recognize an object outside the vehicle (hereinafter such an object is called a physical object in some cases) based on an authorization method for objects that is conventionally adopted for automobiles, and
(2) set a safety region through which a vehicle can pass safely by a method conventionally adopted for automobiles and set such a route as to pass through the safety region as the cruise route through which the vehicle should pass. By performing such rule-based judgment and processing, a functional safety level equivalent to ASIL-D is realized.

In the control device CU, the main arithmetic unit 40 and the safety function part 50 perform processing for the same purpose (e.g., route generation) in parallel based on the same input information (including information acquired by an information acquisition means 70 to be described later). This makes it possible to monitor deviant processing being derived from the main arithmetic unit 40, if any, and adopt judgment and processing by the safety function part 50 or make the main arithmetic unit 40 recompute, as required.

Further, the control device CU is provided with the backup safety IC unit 60 so as to be able to cope even with a situation where both the main arithmetic unit 40 and the safety function part 50 go out of order. The backup safety IC unit 60 is prepared as another configuration, different from the main arithmetic unit 40 and the safety function part 50, to provide the function of generating a route in the rule-based manner based on the vehicle external information and executing vehicle control until the vehicle stops at a safe position.

The control device CU receives data acquired by the information acquisition means 70 that acquires information on internal and external environments of the vehicle as input signals. Also, as an input signal to the control device CU, information from a system and service connected to an external network (e.g., the Internet), like cloud computing, may be supplied (in FIG. 2, shown as EXTERNAL INPUT).

The information acquisition means 70 includes, for example, (1) a plurality of cameras 71, (2) a plurality of radars 72, (3) a position sensor 73 including a positioning system such as GPS, (4) the above-mentioned external input 74 from an external network, (5) mechanical sensors 75 such as a vehicle speed sensor, and (6) a driver input unit 76. The driver input unit 76 includes, for example, an accelerator opening sensor, a steering angle sensor, and a brake sensor. The driver input unit 76 also includes sensors that detect driver's operation on various operational objects such as an accelerator pedal, a brake pedal, a steering wheel, and various switches. The radars 72 are placed on the body of the subject vehicle so as to be able to detect the external environment 360° around the subject vehicle. The radars 72 are each constituted by a millimeter-wave radar that transmits millimeter waves (an example of detection waves), for example. Alternatively, a LiDAR (Light Detection and Ranging) that transmits laser light (an example of detection waves), an infrared radar that transmits infrared rays (an example of detection waves), or an ultrasonic sensor that transmits ultrasonic waves (an example of detection waves) may be used.

### 1-1 Main Arithmetic Unit (1)

The configuration of the main arithmetic unit 40 will be described hereinafter together with an example of route generation using deep learning by the main arithmetic unit 40.

As shown in FIG. 2, the main arithmetic unit 40 includes an object recognition section 241 that recognizes an object outside the vehicle, a map generation section 243, an external environment estimation section 244, an external environmental model 245, a route search section 246, a route generation section 247, and a vehicle status detection section 346.

The object recognition section 241 receives images (including video) of the outside of the vehicle taken with the cameras 71 and recognizes an object outside the vehicle based on the received images. The object recognition section 241 includes an image processing section 241a (see FIG. 3) that receives images taken with the cameras 71 and performs image processing and a recognition section 241b (see FIG. 3) that recognizes an object outside the vehicle based on images processed by the image processing section 241a. A conventionally known object recognition technology based on images and radio waves can be applied to the object recognition section 241.

The results recognized by the object recognition section 241 are sent to the map generation section 243. The map generation section 243 divides the surroundings of the subject vehicle into a plurality of regions (e.g., front, left, right, and rear regions) and generates a map of each region. Specifically, the map generation section 243 integrates object information recognized with the cameras 71 and object information recognized with the radars 72 and reflects the integrated information on the map of each region.

The vehicle status detection section 346 generates motion information of the subject vehicle. Specifically, the vehicle status detection section 346 detects the present motion status of the subject vehicle based on information received from the various mechanical sensors 75. The mechanical sensors 75 include a vehicle speed sensor and a yaw sensor, for example.

The external environment estimation section 244 uses the maps generated by the map generation section 243 and the detection results from the vehicle status detection section 346 for estimation of the vehicle external environment by performing image recognition processing using deep learning. Specifically, the external environment estimation section 244 generates a 3D map representing the vehicle external environment by image recognition processing based on the environmental model 245 constructed using deep learning. In the deep learning, a multilayer neural network (deep neural network (DNN)) is used. As an example of the multilayer neural network, there is a convolutional neural network (CNN).

More specifically, the external environment estimation section 244 (1) combines the maps of the regions to generate an integrated map representing the surroundings of the subject vehicle, (2) predicts displacements, in distance, direction, and relative speed, of a dynamic object in the integrated map with respect to the subject vehicle, and (3) incorporates the predicted results into the external environmental model 245. Further, the external environment estimation section 244 (4) estimates the position of the subject vehicle on the integrated map from the combination of high-precision map information captured from inside and outside the vehicle and position information, vehicle speed information, and 6-axis information acquired through GPS, etc., (5) calculates the route cost, and (6) incorporates the results into the external environmental model 245 together with the motion information of the subject vehicle acquired by the various sensors. With these sets of processing, the external environment estimation section 244 updates the external environmental model 245 at any time, which is used for route generation by the route generation section 247 to be described later.

A signal from the positioning system such as GPS and data for a car navigation system, for example, transmitted from an external network are sent to the route search section 246. The route search section 246 searches for a wide-area route for the vehicle using the signal from the positioning system such as GPS and the data for navigation transmitted from an external network.

The route generation section 247 generates the cruise route of the vehicle based on the external environmental model 245 and the output from the route search section 246. For generation of the cruise route, scores are given for the safety, the fuel efficiency, etc., and at least one cruise route gaining a smaller score is generated. Alternatively, the route generation section 247 may be configured to generate a cruise route based on a plurality of viewpoints, like a cruise route adjusted according to the above-described cruise route and the amount of operation by the driver. The information related to the cruise route generated by the route generation section 247 is included in the external environment data.

### 1-2 Safety Function Part

The configuration of the safety function part 50 will be described hereinafter together with an example of rule-based route generation by the safety function part 50.

As shown in FIG. 2, the safety function part 50 includes object recognition sections 251 and 252 that pattern-recognize an object outside the vehicle, a classification section 351, a preprocessing section 352, a free space search section 353, and a route generation section 354.

The object recognition section 251 receives images (including video) of the outside of the vehicle taken with the cameras 71 and recognizes an object outside the vehicle based on the received images. The object recognition section 251 includes an image processing section 251a (see FIG. 3) that receives images taken with the cameras 71 and performs image processing and a recognition section 251b (see FIG. 3) that recognizes an object outside the vehicle based on images processed by the image processing section 251a. The object recognition section 252 recognizes an object outside the vehicle from a peak list of reflected waves detected by the radars 72.

The classification section 351 and the preprocessing section 352 estimate the external environment, without use of deep learning, from image data recognized by the recognition section 251b and information from the radars 72 by a rule-based technique based on a predetermined rule. As the rule-based external environment estimation method, a conventionally known method can be applied. The conventionally known rule-based external environment estimation method has a functional safety level equivalent to ASIL-D.

Specifically, the classification section 351 receives object recognition results from the object recognition section 252 and classifies the recognized objects into dynamic objects and static objects. More specifically, the classification section 351 (1) divides the surroundings of the subject vehicle into a plurality of regions (e.g., front, left, right, and rear), (2) integrates the object information recognized by the cameras 71 and the object information recognized by the radars 72 in each region, and (3) generates classified information of dynamic objects and static objects for each region.

The preprocessing section 352 integrates the classified results for the individual regions generated by the classification section 351 into one. The integrated information is managed on a grid map (not shown) as classified information of dynamic objects and static objects around the subject vehicle, for example. Also, for each dynamic object, the distance, direction, and relative speed with respect to the subject vehicle are predicted, and the results are incorporated into the information on dynamic object as attached information. The preprocessing section 352 further estimates the position of the subject vehicle with respect to the dynamic and static objects by combining high-precision map information, position information, vehicle speed information, and 6-axis information acquired inside and outside the vehicle.

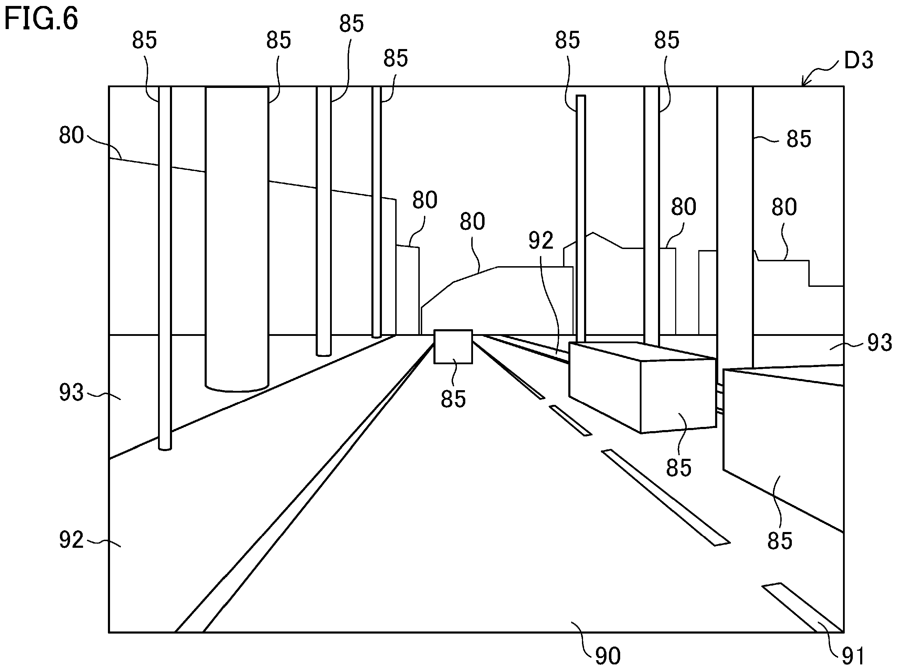

FIG. 6 illustrates integrated data D3 obtained from the processing by the preprocessing section 352. In this integrated data D3, objects around the subject vehicle are uniformly recognized as objects 85, not recognized as to the kinds of the objects (strictly speaking, distinctions between dynamic objects and static objects are made). Also, fine shapes of the objects are not recognized, but rough sizes and relative positions of the objects are recognized as shown in FIG. 6.

The free space search section 353 searches for free space where collision with any of the dynamic and static objects (hereinafter also called physical objects) of which the positions have been estimated by the preprocessing section 352 is avoidable. For example, the free space search section 353 is set to comply with a predetermined rule such as one of regarding an area several meters around a physical object as an unavoidable range. When the physical object is a dynamic object, the free space search section 353 sets free space considering the moving speed. The free space refers to a region on a road where neither dynamic obstacles such as other vehicles and pedestrians nor static obstacles such as center dividers and center poles are present. The free space may include space on road shoulders where emergency parking is allowed.

The route generation section 354 calculates such a route as to pass through the free space found by the free space search section 353. The calculation method of the route by the route generation section 354 is not particularly specified, but a plurality of routes passing through the free space are generated and a route with the lowest cost is selected among the plurality of routes. The route calculated by the route generation section 354 is output to a route decision section 342 to be described later.

Note that the functions of the safety function part 50 described above are those obtained by adopting the method of recognizing objects and the method of avoiding them conventionally used for automobiles into the rule base, and thus have a functional safety level equivalent to ASIL-D, for example.

### 1-3 Main Arithmetic Unit (2)

The main arithmetic unit 40 includes, in addition to the block described in 1-1 Main Arithmetic Unit (1), a critical status judgment section 341, a first vehicle model 248, a second vehicle model 249, the route decision section 342, a target motion decision section 343, a vehicle motion energy setting section 344, an energy management section 345, a driver operation recognition section 347, and selectors 410.

When judging that there is a possibility of a collision with a physical object or a deviation from the lane based on the output from the preprocessing section 352, the critical status judgment section 341 sets a cruise route (e.g., a target position and a vehicle speed) for avoiding such an event.

The driver operation recognition section 347 recognizes the amount and direction of operation by the driver as information for deciding the cruise route. Specifically, the driver operation recognition section 347 acquires sensor information that reflects the driver's operation and outputs information related to the amount and direction of operation by the driver to the route decision section 342. As sensors reflecting the driver's operation, included are sensors that detect the driver's operation on various operational objects such as an accelerator pedal, a brake pedal, a steering wheel, and various switches.

The route decision section 342 decides the cruise route of the vehicle based on the cruise route set by the route generation section 247, the cruise route set by the route generation section 354 of the safety function part 50, and the recognition results from the driver operation recognition section 347. In this cruise route decision method, the highest priority may be given to the cruise route set by the route generation section 247, for example, during normal cruising, although the method is not specifically limited to this. Also, if the cruise route set by the route generation section 247 does not pass through the free space found by the free space search section 353, the cruise route set by the route generation section 354 of the safety function part 50 may be selected. Moreover, the selected cruise route may be adjusted according to the amount and direction of operation by the driver, or high priority may be given to the driver's operation.

The target motion decision section 343 decides 6-axis target motion (e.g., acceleration and angular speed) for the cruise route decided by the route decision section 342. In deciding the 6-axis target motion, the target motion decision section 343 may use the first vehicle model 248. The vehicle 6-axis model refers to one obtained by modeling the speeds of acceleration in the 3-axis directions of "front/rear," "left/right," and "up/down" and the angular speeds in the 3-axis directions of "pitch," "roll," and "yaw." That is, it is a numeric model in which the motion of the vehicle is not captured on only the plane in the classic vehicle dynamics (only the front, rear, left, and right (X-Y movement) of the vehicle and the yaw motion (Z axis)), but the behavior of the vehicle is reproduced using a total of six axes including the pitch (Y axis) and roll (X axis) motions of the vehicle body mounted on four wheels via suspensions and the movement in the Z axis (up and down movement of the vehicle body). The first vehicle model 248 is generated based on preset basic motion functions of the vehicle and vehicle internal and external environment information, for example, and updated as appropriate.

The vehicle motion energy setting section 344 calculates torques required of the driving system, the steering system, and the braking system for the 6-axis target motion decided by the target motion decision section 343. The driving system includes an engine system, a motor, and a transmission, for example. The steering system includes a steering wheel, for example. The braking system includes a brake, for example.

The energy management section 345 calculates the control amounts of actuators AC so as to exert the best energy efficiency in the achievement of the target motion decided by the target motion decision section 343. To state specifically by example, the energy management section 345 calculates the open/close timing of supply and exhaust valves (not shown) and the fuel injection timing of injectors (not shown) at which the fuel efficiency can improve most in the achievement of the engine torque decided by the target motion decision section 343. The actuators AC include the engine system, the brake, the steering wheel, and the transmission, for example. The energy management section 345 may use the second vehicle model 249 when performing the energy management. The second vehicle model 249 is a model indicating the energy consumption of the vehicle. Specifically, it is a model indicating the fuel consumption and the electric power consumption for the operations of the actuators AC of the vehicle. More specifically, the second vehicle model 249 refers to one obtained by modeling the open/close timing of supply and exhaust valves (not shown), the fuel injection timing of injectors (not shown), and the bulb open/close timing of an exhaust reflux system at which the fuel efficiency can improve most at the output of a predetermined amount of engine torque, for example. The second vehicle model 249 is generated during cruising of the vehicle, for example, and updated as appropriate.

The selectors 410 each receive a control signal output from the main arithmetic unit 40 and a backup control signal output from the backup safety IC unit 60. The selectors 410 select and output the control signal output from the main arithmetic unit 40 during normal driving. If a failure is detected in the main arithmetic unit 40, however, the selectors 410 select and output the backup control signal output from the backup safety IC unit 60. The backup safety IC unit 60 will be described in Embodiment 2.

### 2. Configuration Examples of IC Units

FIG. 3 is a block diagram showing configuration examples of the IC units of the vehicle control device CU. In FIG. 3, sections corresponding to those in FIG. 2 are denoted by the same reference numerals.

### 2-1 Signal Processing IC Unit

As described earlier, the signal processing IC unit 10 performs image processing for imaging signals received from the cameras 71 that image the vehicle external environment and outputs the results as image data. As shown in FIG. 3, the signal processing IC unit 10 includes the image processing section 241a of the object recognition section 241 and the image processing section 251a of the object recognition section 251.

The image processing sections 241a and 251a perform, for images taken with the cameras 71, distortion correction processing for correcting distortions of the images (distortions caused by widening of the angle of the cameras 71 in this case) and white balance adjustment processing for adjusting the white balance of the images. Also, the image processing sections 241a and 251a perform processing such as deleting pixels unnecessary for processing by the recognition processing IC unit 20 (authorization of an object, etc.) among the elements constituting an image and thinning data related to colors (e.g., representing all vehicles with the same color), to generate image data D1. At the stage of the image data D1, recognition processing of the external environment including objects seen in the image has not yet been performed.

The image data D1 generated by the image processing section 241a is input into the recognition section 241b of the object recognition section 241 provided in the recognition processing IC unit 20. The image data D1 generated by the image processing section 251a is input into the recognition section 251b provided in the recognition processing IC unit 20.

As described above, according to the present disclosure, for the functions of the object recognition sections 241 and 251, while the image processing sections 241a and 251a that perform image processing are provided in the signal processing IC unit 10, the recognition sections 241b and 251b that perform recognition processing for recognizing the vehicle external environment including objects are provided in the recognition processing IC unit 20.

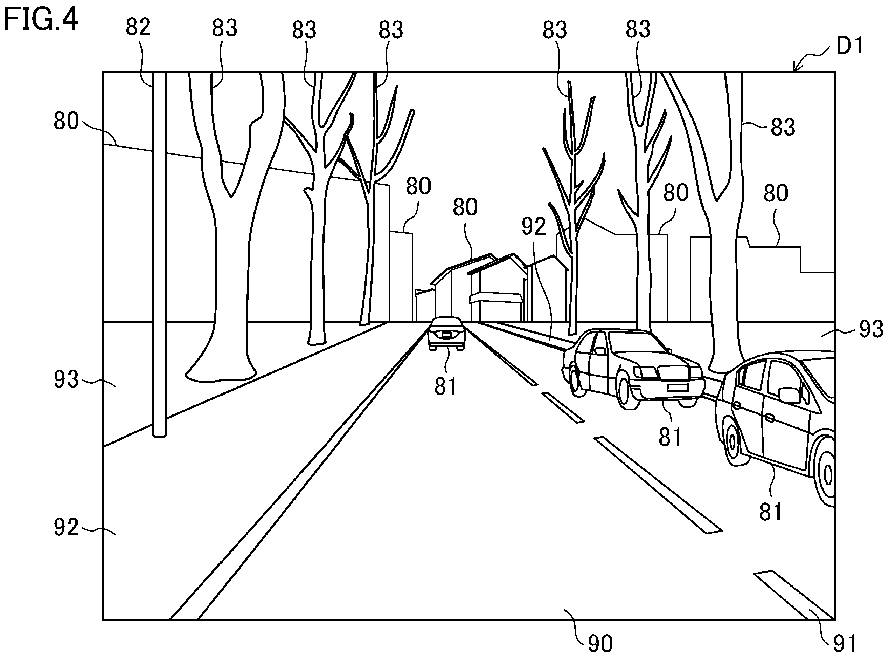

FIG. 4 illustrates an example of the image data D1. The external environment of the subject vehicle shown in the image data D1 includes a roadway 90, sidewalks 92, and empty spaces 93. The roadway 90 is a region where the subject vehicle can move, and includes a center line 91. This external environment of the subject vehicle in the image data D1 also includes other vehicles 81, a sign 82, street trees 83, and buildings 80. The other vehicles 81 (automobiles) represent an example of dynamic objects that move with time. Other examples of dynamic objects include two-wheel motor vehicles, bicycles, and pedestrians. The sign 82 and the street trees 83 represent examples of static objects that do not move with time. Other examples of static objects include center dividers, center poles, and buildings. The dynamic objects and the static objects represent examples of objects.

In the example shown in FIG. 4, the sidewalks 92 are provided on the outer sides of the roadway 90, and the empty spaces 93 are provided on the outer sides of the sidewalks 92 (on the sides farther from the roadway 90). In the example shown in FIG. 4, also, one of the other vehicles 81 is cruising on the same lane as the subject vehicle, out of the two lanes of the roadway 90 divided by the center line 91, and two of the other vehicles 81 are cruising on the other opposing lane. The sign 82 and the street trees 83 are lined along the outer edges of the sidewalks 92. The buildings 80 are located at distant positions in front of the subject vehicle.

### 2-2 Recognition Processing IC Unit

As described earlier, the recognition processing IC unit 20 receives the image data output from the signal processing IC unit 10 and estimates the vehicle external environment including roads ad obstacles based on the image data using deep learning. As shown in FIG. 3, the recognition processing IC unit 20 includes the recognition sections 241b and 251b, the map generation section 243, the external environment estimation section 244, the external environmental model 245, the route search section 246, the route generation section 247, the first vehicle model 248, and the second vehicle model 249.

The recognition section 241b receives the image data D1 (including video data) output from the signal processing IC unit 10 and the peak list of reflected waves detected by the radars 72. The recognition section 241b recognizes an object outside the vehicle based on the received image data D1 and peak list. A conventionally known object recognition technology based on images and radio waves can be applied to the object recognition outside the vehicle. The results of the recognition processing by the recognition section 241b are sent to the map generation section 243.

Since the functions and operations of the map generation section 243, the external environment estimation section 244, the external environmental model 245, the route search section 246, and the route generation section 247 have already been described, the details thereof are omitted here. The first vehicle model 248 and the second vehicle model 249 have also been described, and thus the details thereof are omitted here.

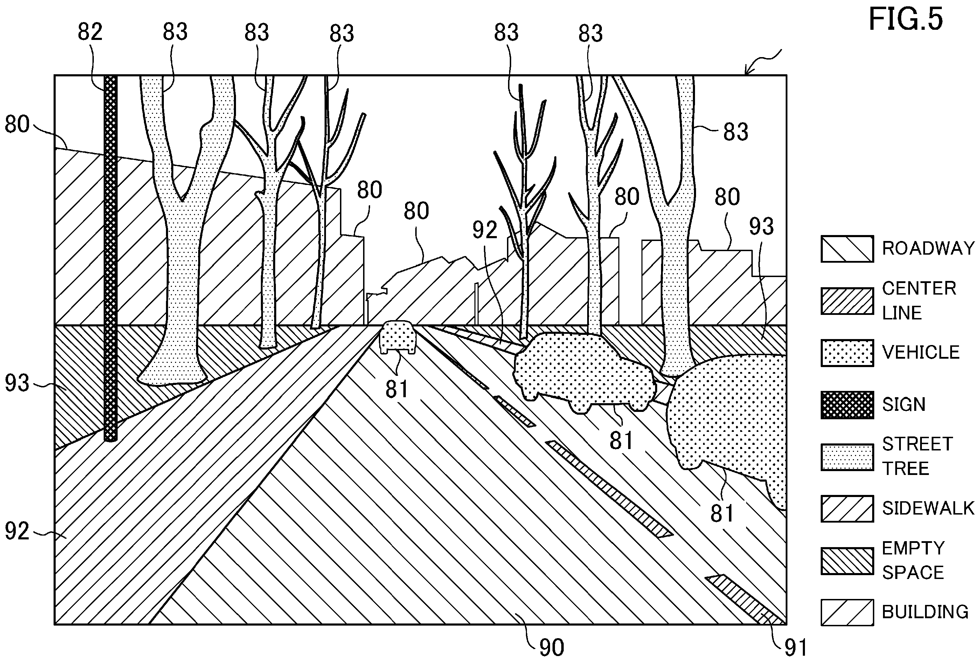

FIG. 5 illustrates an example of segmentation image D2 obtained from the recognition processing by the external environment estimation section 244. In the segmentation image D2, the external environment has been segmented pixel by pixel into any of the roadway 90, the center line 91, the other vehicles 81, the sign 82, the street trees 83, the sidewalks 92, the empty spaces 93, and the buildings 80. In the segmentation image D2, also, up to information on the shapes of the objects has been recognized.

The recognition section 251b, like the recognition section 241b, receives the image data D1 (including video data) output from the signal processing IC unit 10 and the peak list of reflected waves detected by the radars 72. The recognition section 251b recognizes an object outside the vehicle based on the received image data D1 and peak list. The recognition section 251b is different from the recognition section 241b in performing pattern recognition. A conventionally known object recognition technology based on images and radio waves can be applied to the pattern recognition by the recognition section 251b.

### 2-3 Judgment IC unit

As described earlier, the judgment IC unit 30 receives the external environment data output from the recognition processing IC unit 20, performs judgment processing for cruise control of the vehicle based on the external environment data, and outputs a cruise control signal based on the judgment processing results. The judgment IC unit 30 has a function of calculating the cruise route of the vehicle, separately from the recognition processing IC unit 20. Route generation by the judgment IC unit 30 includes setting a safety region through which the vehicle can pass safely by a method conventionally adopted for automobiles, and setting such a route as to pass through the safety region as the cruise route through which the vehicle should pass. Specifically, the judgment IC unit 30 includes the classification section 351, the preprocessing section 352, the free space search section 353, and the route generation section 354. Also, in order to decide the cruise route along which the vehicle should cruise and calculate the target motion of the vehicle for following the cruise route, the judgment IC unit 30 includes the critical status judgment section 341, the route decision section 342, the target motion decision section 343, the vehicle motion energy setting section 344, and the energy management section 345.

Since the functions and operations of the classification section 351, the preprocessing section 352, the free space search section 353, the route generation section 354, the critical status judgment section 341, the route decision section 342, the target motion decision section 343, the vehicle motion energy setting section 344, and the energy management section 345 have already been described, the details thereof are omitted here.

As described above, according to this embodiment, the signal processing IC unit 10 for performing image processing for the output from the cameras is provided independently from the other part of the configuration. As described earlier, in vehicle type expansion, the number of cameras mounted on a vehicle, the positions of the cameras, and the resolution of the cameras may differ among the types. Also, in the course of vehicle type expansion, the algorithm and processing capability may be changed for the processing of images output from the cameras. The configuration according to this embodiment can respond to such cases of vehicle type expansion by only changing the signal processing IC unit 10. On the occasion of vehicle type expansion, then, a common IC unit can be used among vehicle types as the later-stage recognition processing IC unit 20 and/or judgment IC unit 30, for example.

Also, as described earlier, the "recognition processing of the vehicle external environment" is in the process of technological progress and predicted to experience great technological change in the future. In consideration of this, the recognition processing IC unit 20 for performing recognition processing is provided independently from the other part of the configuration. With this, the recognition processing IC unit 20 can be replaced with the latest one appropriately in a cycle of vehicle model changes.

At the stage subsequent to the recognition processing IC unit 20, provided is the judgment IC unit 30 that has the function of estimating the external environment from the image data recognized by the recognition section 251b and the information from the radars 72, without use of deep learning, by a rule-based technique based on a predetermined rule. The judgment IC unit 30 performs judgment processing for cruise control of the vehicle based on the above rule-based external environment recognition results and the recognition results by the recognition processing IC unit 20, and outputs the cruise control signal based on the judgment processing results. Having such a configuration, a mature process can be adopted in the judgment IC unit 30, for example, and thus the reliability of the judgment processing for cruise control of the vehicle can be enhanced.

### (Embodiment 2)

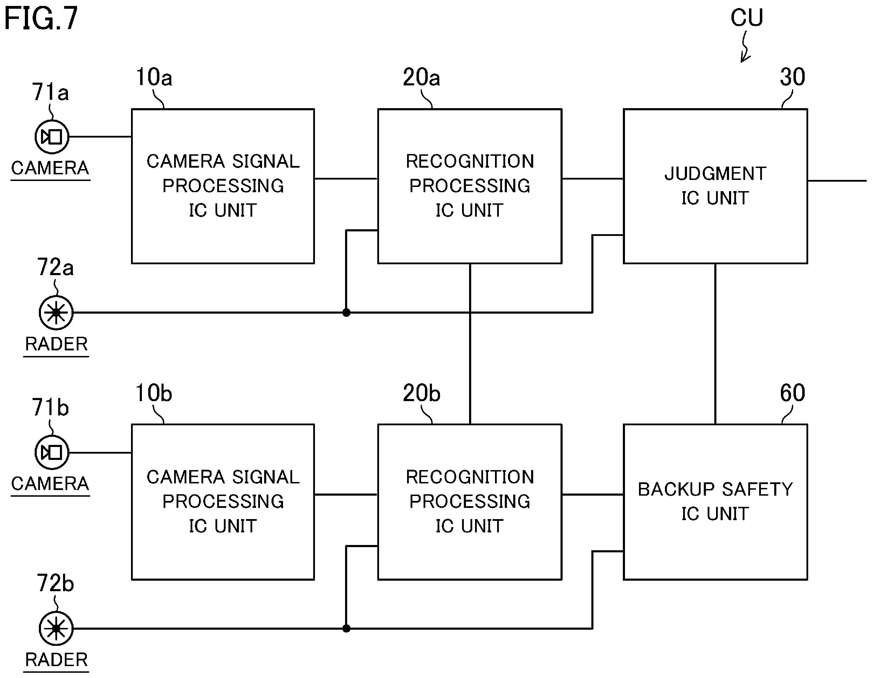

FIG. 7 is a block diagram showing a configuration of a vehicle control device CU according to this embodiment. The vehicle control device CU of FIG. 7 is different from the configuration of FIG. 1 in that two signal processing IC units 10 and two recognition processing IC units 20 are provided in parallel. This embodiment is also different from the configuration of FIG. 1 in that the backup safety IC unit 60 is provided. The following description will be made centering on different points from FIG. 1, and thus description on the common part of the configuration will be omitted in some cases.

In this embodiment, for convenience of description, the two parallel-arranged signal processing IC units 10 are denoted separately by 10a and 10b. Similarly, the two parallel-arranged recognition processing IC units 20 are denoted separately by 20a and 20b. The signal processing IC units 10a and 10b may be identical to each other or different in part of the function and configuration from each other. The recognition processing IC units 20a and 20b may be identical to each other or different in part of the function and configuration from each other.

As shown in FIG. 7, the signal processing IC unit 10a performs image processing of an imaging signal received from a camera 71a as some of the plurality of cameras 71 and outputs the results as image data. The signal processing IC unit 10b performs image processing of an imaging signal received from a camera 71b as the remainder of the plurality of cameras 71 and outputs the results as image data. The configuration and operations of the signal processing IC units 10a and 10b may be similar to those of the signal processing IC unit 10 described in Embodiment 1, and thus detailed description thereof is omitted here.

The recognition processing IC unit 20a receives the image data output from the signal processing IC unit 10a, performs recognition processing of the vehicle external environment based on the image data, and outputs external environment data obtained from the recognition processing. In the recognition processing IC unit 20a, the map generation section 243 integrates object information recognized with the camera 71a and object information recognized with a radar 72a as some of the plurality of radars 72 and reflects the integrated information on the map. The other configuration may be similar to that of the recognition processing IC unit 20 described in Embodiment 1, and thus detailed description thereof is omitted here.

The recognition processing IC unit 20b receives the image data output from the signal processing IC unit 10b, performs recognition processing of the vehicle external environment based on the image data, and outputs external environment data obtained from the recognition processing. In the recognition processing IC unit 20b, the map generation section 243 integrates object information recognized with the camera 71b and object information recognized with a radar 72b as some of the plurality of radars 72 and reflects the integrated information on the map.

Note herein that the camera 71a and the radar 72a, for example, are placed so that the external environment can be recognized 360° around the subject vehicle by putting both detection ranges together. Similarly, the camera 71b and the radar 72b are placed so that the external environment can be recognized 360° around the subject vehicle by putting both detection ranges together.

The external environment data processed by the recognition processing IC unit 20b is output to the recognition processing IC unit 20a, for example. The recognition processing IC unit 20a integrates the external environment data processed by this unit itself and the external environment data processed by the recognition processing IC unit 20b, and outputs the integrated data to the judgment IC unit 30. The configuration and operations of the judgment IC unit 30 may be similar to those in Embodiment 1, and thus detailed description thereof is omitted here.

The recognition processing IC units 20a and 20b may output their external environment data to the judgment IC unit 30 separately. In this case, the judgment IC unit 30 may perform judgment processing for cruise control of the vehicle using the external environment data from the recognition processing IC units 20a and 20b, and output the cruise control signal based on the judgment processing results.

### Backup Safety IC Unit

The configuration of the backup safety IC unit 60 and the rule-based route generation by the backup safety IC unit 60 will be described hereinafter. The backup safety IC unit 60 has a configuration required to allow it to perform minimum moving operation to a safe stop position and stopping operation in the rule-based manner. More specifically, the backup safety IC unit 60 is configured to generate a safe cruise route covering until a moving vehicle stops at a stop position that satisfies preset criteria, and configured to decide a backup target motion for letting the vehicle cruise along the safe cruise route and output backup control signals to the actuators to realize the backup target motion. The specific block configuration and functions can be implemented in a similar way to those of the safety function part 50.

The specific configuration and operations of the backup safety IC unit 60 will be described hereinafter.

As shown in FIG. 2, in the backup safety IC unit 60, objects are classified into dynamic objects and static objects based on the results recognized by the object recognition section 251 (recognition section 251b). In FIG. 2, this is executed by a circuit block labeled as CLASSIFICATION OF STATIC AND DYNAMIC OBJECTS under the reference numeral 603. Note that, as the object recognition section, the one in the safety function part 50 (the object recognition section 251) may be used in common, or one may be individually provided in the backup safety IC unit 60.

The backup safety IC unit 60 includes a vehicle status measurement section 601 that measures the vehicle status and a driver operation recognition section 602 that grasps the driver's operation condition. The vehicle status measurement section 601 acquires the vehicle status based on vehicle speed information and 6-axis information for use for route generation as auxiliary information on the subject vehicle. The driver operation recognition section 602 has a function equivalent to the driver operation recognition section 347. The other functions of the backup safety IC unit 60 are substantially similar to those described so far, although provided independently from the main arithmetic unit 40 and the safety function part 50, and thus detailed description thereof is omitted here. Specifically, a preprocessing section 604 corresponds to the preprocessing section 352, a free space search section 605 corresponds to the free space search section 353, a route generation section 606 corresponds to the route generation section 354, a critical status judgment section 607 corresponds to the critical status judgment section 341, a target motion decision section 608 corresponds to the target motion decision section 343, a route decision section 609 corresponds to the route decision section 342, a vehicle motion energy setting section 610 corresponds to the vehicle motion energy setting section 344, and an energy management section 611 corresponds to the energy management section 345.

The selectors 410 each receive a control signal output from the main computing section 40 and a backup control signal output from the backup safety IC unit 60. The selectors 410 select and output the control signal output from the main computing section 40 during normal driving. If an abnormality is detected in the vehicle, like detection of a failure of the main computing section 40, or if an abnormality is sensed in the driver, like a disease of the driver, the selectors 410 select and output the backup control signal output from the backup safety IC unit 60.

As described above, according to this embodiment, functions and advantages similar to those in Embodiment 1 are obtained. Further, in this embodiment, since dual processing system is adopted in the signal processing IC units 10a and 10b and the recognition processing IC units 20a and 20b, redundancy can be secured. Specifically, even if one processing system fails, the other processing system can be used to perform backup processing. Also, since the processing results of one processing system can be verified by the processing results of the other processing system, the functional safety level can be improved.

Also, in this embodiment, having the backup safety IC unit 60, if an abnormality is detected in at least either the vehicle or a passenger of the vehicle, the judgment processing results of the rule-based safety backup IC unit can be used. This can improve the functional safety level.

The present disclosure is useful as a vehicle control device mounted in an automobile.

## Claims

1. A vehicle control device (CU) comprising;
a signal processing integrated circuit (IC) unit (10) for receiving an output from a camera (71) mounted in a vehicle, performing image processing on the output from the camera (71), and outputting image data obtained through the image processing;
a recognition processing IC unit (20)
provided as another unit different from the signal processing IC unit (10),
receiving the image data,
generating an integrated map representing surroundings of the vehicle by performing image recognition processing based on the image data and an external environmental model (245) constructed with deep learning, and
setting, based on the integrated map, a cruise route candidate that is on a road and avoids an obstacle;
a judgment IC unit (30) provided as another unit different from the signal processing IC unit (10) and the recognition processing IC unit (20),
determining a target motion of the vehicle required when the vehicle cruises along the cruise route candidate output from the recognition processing IC unit (20);
calculating a driving force, a braking force, and a steering angle for realizing the determined target motion; and
outputting, based on a result of the calculation, a cruise control signal for controlling driving, braking, and steering of the vehicle,
a backup safety IC unit (60) for
receiving the image data output from the signal processing IC unit (10), performing recognition processing of the external environment of the vehicle from the image data based on rule-based processing, and
performing judgment processing for cruise control of the vehicle based on external environment data obtained through the recognition processing,
**characterized in that**
the judgment processing IC unit (30) receives a result of the judgment processing by the backup safety IC unit (60), and outputs a backup cruise control signal based on the result of the judgment processing by the backup safety IC unit (60) instead of the cruise control signal if a recognition block recognizing a driver's condition and a vehicle status detects a disease of a driver.

2. The vehicle control device (CU) of claim 1,
the judgment IC unit (30) further including
a function of searching for free space around the vehicle by performing rule-based processing based on external environment data output from the recognition processing IC unit (20) and
a function of generating a rule-based cruise route passing through the free space by performing rule-based processing, and
if the cruise route candidate output from the recognition processing IC unit (20) passes through the free space,
determining that the cruise route candidate is a cruise route applied to the vehicle; while
if the cruise route candidate passes outside the free space,
determining that the rule-based cruise route is a cruise route applied to the vehicle.

3. The vehicle control device (CU) of claim 2, wherein
processing of generating the cruise route candidate by the recognition processing IC unit (20) is performed in parallel or simultaneously with processing of generating the rule-based cruise route by the judgment IC unit (30).

## Patentansprüche

1. Fahrzeugsteuervorrichtung (CU), umfassend;
eine Signalverarbeitungs-IC-Einheit (10) zum Empfangen einer Ausgabe von einer in einem Fahrzeug montierten Kamera (71), zum Durchführen einer Bildverarbeitung an der Ausgabe von der Kamera (71) und zum Ausgeben von Bilddaten, die durch die Bildverarbeitung erhalten wurden;
eine Erkennungsverarbeitungs-IC-Einheit (20),
die als eine andere Einheit bereitgestellt ist, die sich von der Signalverarbeitungs-IC-Einheit (10) unterscheidet,
die die Bilddaten empfängt,
eine integrierte Karte, die die Umgebung des Fahrzeugs darstellt, erzeugt, indem sie eine Bilderkennungsverarbeitung auf der Grundlage der Bilddaten und eines mit Deep Learning konstruierten externen Umgebungsmodells (245) durchführt, und
auf der Grundlage der integrierten Karte einen Cruise-Route-Kandidaten festlegt, der sich auf einer Straße befindet und ein Hindernis vermeidet;
eine Entscheidungsverarbeitungs-IC-Einheit (30), die als eine andere Einheit bereitgestellt ist, die sich von der Signalverarbeitungs-IC-Einheit (10) und der Erkennungsverarbeitungs-IC-Einheit (20) unterscheidet,
die eine Zielbewegung des Fahrzeugs bestimmt, die erforderlich ist, wenn das Fahrzeug entlang des von der Erkennungsverarbeitungs-IC-Einheit (20) ausgegebenen Cruise-Route-Kandidaten fährt;
eine Antriebskraft, eine Bremskraft und einen Lenkwinkel zur Realisierung der bestimmten Zielbewegung berechnet; und
auf der Grundlage eines Ergebnisses der Berechnung ein Fahrregelungssignal zum Regeln des Antriebs, des Bremsens und der Lenkung des Fahrzeugs ausgibt,
eine Backup-Sicherheits-IC-Einheit (60) zum Empfangen der von der Signalverarbeitungs-IC-Einheit (10) ausgegebenen Bilddaten,
zum Durchführen einer Erkennungsverarbeitung der externen Umgebung des Fahrzeugs aus den Bilddaten auf der Grundlage einer regelbasierten Verarbeitung, und
zum Durchführen einer Entscheidungsverarbeitung für die Fahrregelung des Fahrzeugs auf der Grundlage externer Umgebungsdaten, die durch die Erkennungsverarbeitung erhalten wurden,
**dadurch gekennzeichnet, dass**
die Entscheidungsverarbeitungs-IC-Einheit (30) ein Ergebnis der Entscheidungsverarbeitung durch die Backup-Sicherheits-IC-Einheit (60) empfängt und auf der Grundlage des Ergebnisses der Entscheidungsverarbeitung durch die Backup-Sicherheits-IC-Einheit (60) anstelle des Fahrregelungssignals ein Backup-Fahrregelungssignal ausgibt, wenn ein Erkennungsblock, der einen Zustand eines Fahrers und einen Fahrzeugzustand erkennt, eine Erkrankung eines Fahrers erkennt.

2. Fahrzeugsteuervorrichtung (CU) nach Anspruch 1,
wobei die Entscheidungs-IC-Einheit (30) ferner umfasst
eine Funktion zum Suchen nach Freiraum um das Fahrzeug herum durch Durchführen einer regelbasierten Verarbeitung auf der Grundlage von externen Umgebungsdaten, die von der Erkennungsverarbeitungs-IC-Einheit (20) ausgegeben werden, und
eine Funktion zum Erzeugen einer regelbasierten Fahrroute, die durch den Freiraum verläuft, durch Durchführen einer regelbasierten Verarbeitung, und
wenn der von der Erkennungsverarbeitungs-IC-Einheit (20) ausgegebene Fahrrouten-Kandidat durch den Freiraum verläuft,
bestimmt, dass der Fahrrouten-Kandidat eine auf das Fahrzeug angewandte Fahrroute ist; während
wenn der Fahrrouten-Kandidat außerhalb des Freiraums verläuft,
bestimmt wird, dass die regelbasierte Fahrroute eine auf das Fahrzeug angewandte Fahrroute ist.

3. Fahrzeugsteuervorrichtung (CU) nach Anspruch 2, wobei
die Verarbeitung zum Erzeugen des Cruise-Route-Kandidaten durch die Erkennungsverarbeitungs-IC-Einheit (20) parallel oder gleichzeitig mit der Verarbeitung zum Erzeugen der regelbasierten Cruise-Route durch die Entscheidungs-IC-Einheit (30) durchgeführt wird.

## Revendications

1. Dispositif de commande de véhicule (CU), comprenant ;
une unité de circuit intégré (IC) de traitement de signal (10) destinée à recevoir une sortie provenant d'une caméra (71) montée dans un véhicule, à effectuer un traitement d'image sur la sortie provenant de la caméra (71), et à délivrer des données d'image obtenues par le traitement d'image ;
une unité IC de traitement de reconnaissance (20),
prévue comme une autre unité différente de l'unité IC de traitement de signal (10),
recevant les données d'image,
générant une carte intégrée représentant l'environnement du véhicule en effectuant un traitement de reconnaissance d'image sur la base des données d'image et d'un modèle d'environnement externe (245) construit par apprentissage profond, et
définissant, sur la base de la carte intégrée, un candidat d'itinéraire de croisière qui se trouve sur une route et évite un obstacle ;
une unité IC de traitement de jugement (30) prévue comme une autre unité différente de l'unité IC de traitement de signal (10) et de l'unité IC de traitement de reconnaissance (20),
déterminant un mouvement cible du véhicule requis lorsque le véhicule circule le long du candidat d'itinéraire de croisière délivré par l'unité IC de traitement de reconnaissance (20) ;
calculant une force motrice, une force de freinage et un angle de braquage pour réaliser le mouvement cible déterminé ; et
délivrant, sur la base d'un résultat du calcul, un signal de commande de croisière destiné à commander la propulsion, le freinage et la direction du véhicule,
une unité IC de sécurité de secours (60) destinée à recevoir les données d'image délivrées par l'unité IC de traitement de signal (10),
à effectuer un traitement de reconnaissance de l'environnement externe du véhicule à partir des données d'image sur la base d'un traitement fondé sur des règles, et
à effectuer un traitement de jugement pour la commande de croisière du véhicule sur la base de données d'environnement externe obtenues par le traitement de reconnaissance,
**caractérisé en ce que**
l'unité IC de traitement de jugement (30) reçoit un résultat du traitement de jugement par l'unité IC de sécurité de secours (60), et délivre un signal de commande de croisière de secours sur la base du résultat du traitement de jugement par l'unité IC de sécurité de secours (60) à la place du signal de commande de croisière si un bloc de reconnaissance reconnaissant un état d'un conducteur et un état du véhicule détecte une maladie d'un conducteur.

2. Dispositif de commande de véhicule (CU) selon la revendication 1,
l'unité IC de jugement (30) comprenant en outre
une fonction de recherche d'espace libre autour du véhicule en effectuant un traitement fondé sur des règles sur la base de données d'environnement externe délivrées par l'unité IC de traitement de reconnaissance (20), et
une fonction de génération d'un itinéraire de croisière fondé sur des règles passant par l'espace libre en effectuant un traitement fondé sur des règles, et
si le candidat d'itinéraire de croisière délivré par l'unité IC de traitement de reconnaissance (20) passe par l'espace libre,
déterminant que le candidat d'itinéraire de croisière est un itinéraire de croisière appliqué au véhicule ; tandis que
si le candidat d'itinéraire de croisière passe à l'extérieur de l'espace libre,
déterminant que l'itinéraire de croisière fondé sur des règles est un itinéraire de croisière appliqué au véhicule.

3. Dispositif de commande de véhicule (CU) selon la revendication 2, dans lequel
le traitement de génération du candidat d'itinéraire de croisière par l'unité IC de traitement de reconnaissance (20) est effectué en parallèle ou simultanément avec le traitement de génération de l'itinéraire de croisière fondé sur des règles par l'unité IC de jugement (30).
